# EUROPEAN PATENT SPECIFICATION

(11) **EP 0 680 156 B1**
(45) Date of publication and mention of the grant of the patent: **22.01.2003**
(21) Application number: 95301635.9
(22) Date of filing: 13.03.1995
(51) Int. Cl.: H04B 1/38, H04B 1/40

(54) **Radio station apparatus and signal transmission method thereof**
Funkgerät und entsprechendes Übertragungsverfahren
Appareil radio et procédé de transmission correspondant

(30) Priority: 26.04.1994 JP 8858894
(43) Date of publication of application: 02.11.1995
(73) Proprietor: NEC Corporation, Minato-ku, Tokyo 108-8001 (JP)
(72) Inventor: Yoshizawa, Yasunori, Minato-ku, Tokyo 108-01 (JP); Ohmagari, Shinichi, Minato-ku, Tokyo 108-01 (JP)
(74) Representative: Abnett, Richard Charles

(56) References cited:
- EP-A- 0 246 658
- EP-A- 0 261 600

## Description

### BACKGROUND OF THE INVENTION

This invention relates to radio station apparatus, and more particularly to radio station apparatus which is used with a transmitter-receiver for data communication employed in a very small aperture terminal (VSAT) for satellite communication, and which includes an outdoor unit (ODU), an indoor unit (IDU) and a cable for interconnecting the outdoor and indoor units.

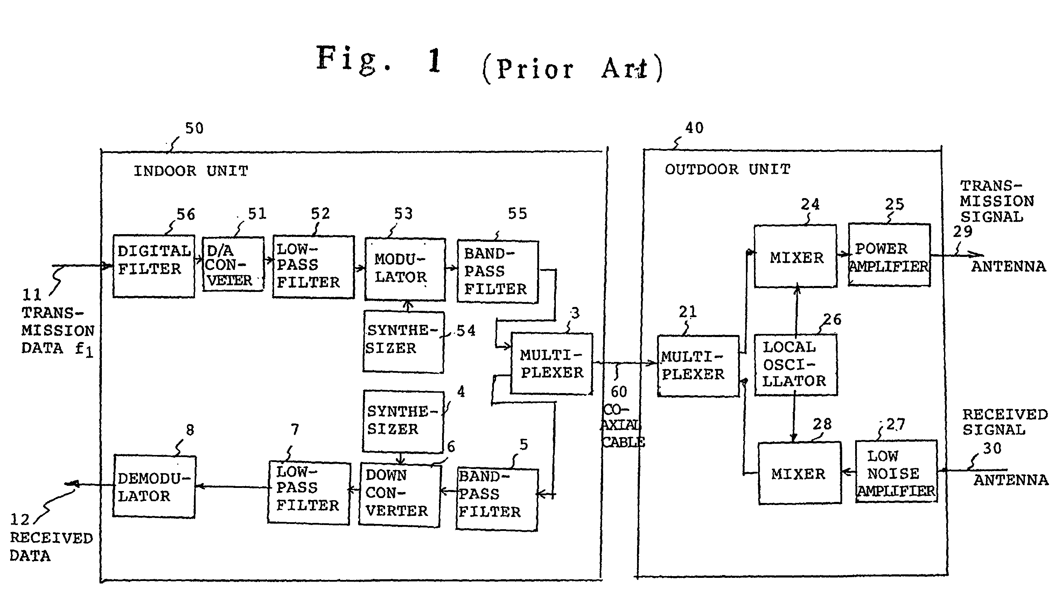

The construction of a radio transmitter-receiver employed in a known VSAT system is shown in Fig. 1.

Referring to Fig. 1, indoor unit 50 and outdoor unit 40 are connected to each other by way of a single coaxial cable 60. An antenna (not shown) is connected to outdoor unit 40.

A binary digital data signal 11 with a data rate f₁ is inputted to indoor unit 50 via an input terminal. The input data is applied to digital filter 56 where it is filtered to have a desired transmission spectrum and is converted into a data signal with m-bit quantization and an oversampling ratio of n. The data signal converted in this manner is further converted into an analog signal by digitallanalog converter (D/A converter) 51. The analog signal outputted from D/A converter 51 is filtered by low-pass filter 52 so that high frequency components are removed from the analog signal. The output signal of low-pass filter 52 is converted by frequency conversion into a signal in an IF band and simultaneously modulated by phase modulation in modulator 53. A carrier set to the required IF (intermediate frequency) signal frequency is supplied to modulator 53 from transmission synthesizer 54. The output signal from modulator 53 is connected to coaxial cable 60 through band-pass filter 55 and multiplexer or duplexer 3, which has a transmission/reception dividing function. A reference frequency signal for local oscillator 26 of outdoor unit 40, a DC power supply current and some other required signals are also superimposed by multiplexer 3.

Meanwhile, a received signal introduced into indoor unit 50 from outdoor unit 40 is first inputted to multiplexer 3 through coaxial cable 60 and then inputted to down-converter 6 via band-pass filter 5. The received signal inputted to down-converter 6 is converted into another signal of a predetermined frequency from synthesizer 4, applied through a low-pass filter 7, and demodulated by demodulator 8 so that it is outputted as received data 12.

In outdoor unit 40, the transmission IF signal inputted through coaxial cable 60 is first applied to multiplexer 21 and then is converted into a signal of a required RF signal band by mixer 24. The RF signal from mixer 24 is applied to power amplifier 25 and is outputted as transmission RF signal 29 to the antenna.

On the other hand, received RF signal 30 first passes through low noise amplifier 27 and then is converted into a required received IF signal by mixer 28. The received IF signal is inputted to multiplexer or duplexer 21.

Local oscillator 26 generates a local oscillation frequency for frequency conversion in mixers 28 and 24.

The known radio station apparatus described above is disclosed in Japanese Laid-Open Patent Application No. Showa 62-274934.

The transmission data is received at several different possible transmission rates T₁, ranging from several kbps (kilobits per second) to several hundreds kbps, and thus the frequency of the signal on the coaxial tying cable also varies in dependence on the transmission rate. In the example below there are two different received transmission rates f₁. This can cause various problems. For example, there is a problem in that a plurality of filters for separation of transmission signals may be required for the outdoor unit side, which complicates the circuit. Another problem is that some transmission rates make it difficult to modulate the RF signal directly, since those transmission data rates interfere with another signal.

### SUMMARY OF THE INVENTION

The invention in its various aspects is defined in the independent claims below, to which reference should now be made. Advantageous features are set forth in the appendant claims.

A preferred radio station apparatus embodying the invention is described in more detail below and includes an indoor unit, an outdoor unit, and a cable connecting the units together. An inputted first binary digital signal is converted into a serial second binary digital signal by a parallel/serial converter, and is modulated by amplitude shift keying (ASK) onto a third binary digital signal by a modulator with carrier f₃ (Hz). The frequency of carrier f₃ is a multiple of the oversampling ratio n times the number of quantization bits m times the data rate of the inputted data. The frequency of carrier f₃ is a multiple of this product for each of the possible data rates of the received data.

The third binary digital signal is frequency division multiplexed with one or more other signals in a multiplexer, and then transferred to the outdoor unit by the coaxial cable.

In the outdoor unit the third binary digital signal is demultiplexed and converted into an analog signal by a D/A converter. The analog signal is RF modulated and is amplified by a power amplifier and then transmitted.

### BRIEF DESCRIPTION OF THE DRAWINGS

The invention will be described in more detail by way of example with reference to the drawings, in which:
Fig. 1 is a block diagram showing the construction of a transmitter-receiver employed in a known VSAT system;
Fig. 2 is a block diagram of an embodiment of a radio station apparatus embodying the present invention; and
Fig. 3 is a block diagram of demodulation circuit 24 shown in Fig. 2.

### DESCRIPTION OF THE PREFERRED EMBODIMENT

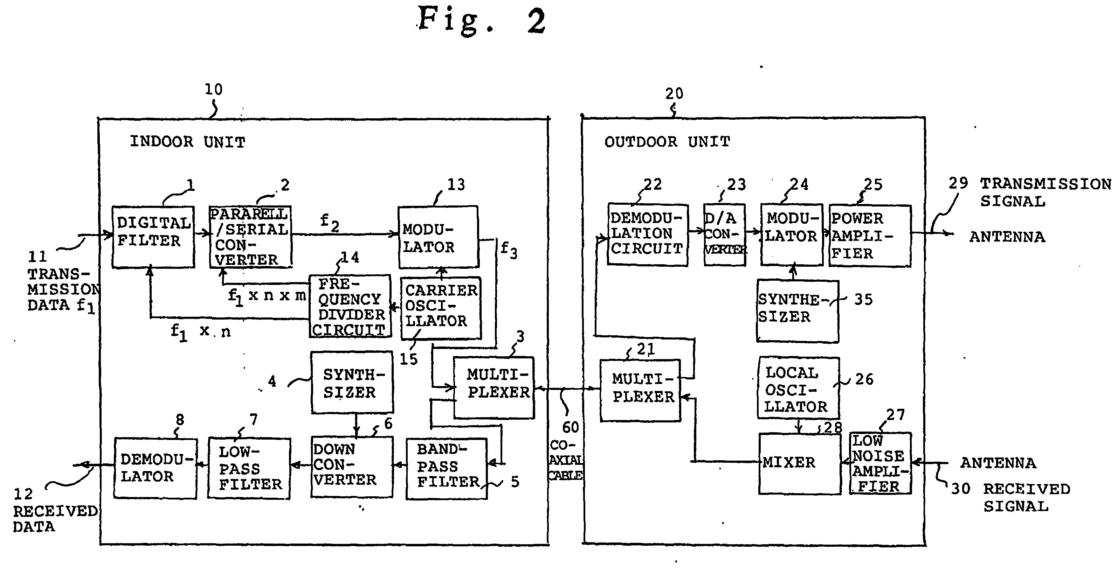

Fig. 2 is a block diagram of an embodiment of a radio station apparatus embodying the present invention.

The radio station apparatus comprises indoor unit 10, outdoor unit 20, coaxial cable 60 which connects indoor unit 10 and outdoor unit 20 to each other, and an antenna (not shown). The receiver signal path is the same as in Figure 1 and is not described again.

in indoor unit 10, it is assumed that transmission data 11 in the form of a binary digital signal whose information rate is f₁ bps (bits per second) is inputted to digital filter 1. Digital filter 1 is a circuit for processing the transmission data 11 to have a desired transmission spectrum, and performs oversampling with an oversampling ratio of n and with m-bit quantization. A converter 2 outputs a serial binary signal by performing parallel/serial conversion, the serial binary digital signal having a transmission rate of f₂ bps (= f₁ x n x m). Carrier oscillator 15 generates an oscillation frequency carrier of f₃ Hz which is an integral number of times that of transmission data 11. The output of carrier oscillator 15 is distributed to frequency divider circuit 14 and modulator 13. Frequency divider circuit 14 divides the oscillation signal of carrier oscillator 15 so that it outputs sampling clocks of f₁ x n Hz to digital filter 1 and outputs clocks of f₁ x n x m Hz to parallel/serial converter 2.

The output signal of parallel/serial converter 2 is modulated by ASK (amplitude shift keying) with a carrier of a frequency of f₃ Hz by modulator 13. The ASK modulated wave of frequency f₃ Hz is inputted to multiplexer 3, at which it is frequency multiplexed with a DC power supply current and a reference frequency signal. The output of multiplexer 3 is outputted to coaxial cable 60.

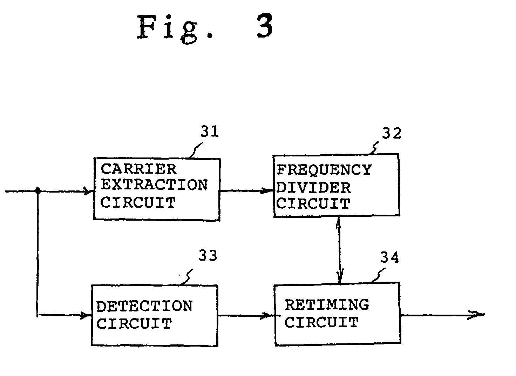

In outdoor unit 20, transmission data received by way of coaxial cable 60 is divided by a band-pass filter in multiplexer 21 and inputted to demodulator 22. Fig. 3 is a block diagram of demodulator 22. As shown in Fig. 3, demodulator 22 includes carrier extraction circuit 31, dividing circuit 32, detection circuit 33 and retiming circuit 34.

Carrier extraction circuit 31 limits the modulated wave to extract a clock signal of the frequency of f₃ Hz. The clock signal is further divided to the same frequencies as in frequency divider circuit 14 of indoor unit 10 by dividing circuit 32.

Meanwhile, the output signal of multiplexer 21 is compared with a predetermined threshold level by detection circuit 33 so that data components are extracted. The detection circuit detects the modulated wave by envelope detection. The extracted data are inputted to retiming circuit 34, by which they are converted by serial to parallel conversion with the clock signal obtained by frequency divider circuit 32 to obtain a signal of m bits whose frequency is f₁ x n Hz.

The output of retiming circuit 34 is digital/analog converted by D/A converter 23 and then directly modulated by modulator 24 onto a carrier of a required frequency from synthesizer 35. The output signal of modulator 24 is sent out as transmission RF signal 29 via power amplifier 25.

Now, the dividing ratios of dividing circuit 14 are selected in such a manner as described below so that principal frequency f₃ of demodulator 22 of outdoor unit 20 need not to be changed even when transmission data inputted to indoor unit 10 has different information rates of f₁ bps. In particular, if it is assumed that information rate f₁, oversampling ratio n, and quantization amount m of the transmission data individually have the two sets of values listed in Table 1, the frequencies f₂ of the output data of parallel/serial converter 2 are 640 kbps and 3,200 kbps respectively. In this instance, as oscillation frequency f₃ of carrier oscillator 15, a common multiple of the two values of f₂ is selected, and in Table 1, 32 MHZ is selected. There may in fact be several different possible receive transmission rates.

Where f₁ = 10 kbps, frequency divider circuits 14 and 32 are set to divide f₃ = 32 MHZ by 50 and 3,200 and to generate clock signals of f₂ = 640 kHz and f₁ = 10 kHz, respectively. On the other hand, where f₁ = 100 kHz, frequency divider circuits 14 and 32 divide f₃ = 32 MHZ by 10 and 320 and generate clock signals of f₂ = 3,200 kHz and f₁ = 100 kHz, respectively.

**Table 1**

| | | |
|---|---|---|
| f₁ (Dividing ratio from f₃) | 10 kbps (3,200) | 100 kbps (320) |
| Oversampling ratio: n | 8 | 4 |
| Quantization amount: m | 8 bits | 8 bits |
| f₂ (Dividing ratio from f₃) | 640 kbps (50) | 3,200 kbps (10) |
| f₃ | 32 MHZ | 32 MHZ |

As described above, according to the present system, the radio station apparatus is so constructed that transmission of a transmission signal from an indoor unit to an outdoor unit can be performed with a carrier frequency which can be separated by a single band-pass filter even when the information rates of transmission data are different. Also, the modulator in the outdoor unit directly performs modulation with a single frequency, and no other frequency conversion is required, so that the construction of the apparatus can be simplified and its size minimized.

## Claims

1. A radio station apparatus which comprises an indoor unit (10) and an outdoor unit (20) coupled to the indoor unit by a coaxial cable (60), wherein an inputted first binary digital data signal whose data rate can take two or more values is converted into a corresponding signal, modulated onto a predetermined radio carrier frequency, and transmitted through an antenna, and a signal received through said antenna is demodulated and outputted, said radio station apparatus comprising:
data rate conversion means (1,2) provided in said indoor unit (10) for converting said first binary digital data signal of frequency f₁ (Hz) into a serial second binary digital data signal of frequency f₂ (Hz) where f₂ (Hz) = f₁ x n x m (Hz), where n is the oversampling ratio and m is the number of quantization bits, m and n each being an integer larger than two;
modulation means (13) provided in said indoor unit (10) for modulating said second binary digital data signal to generate a modulated signal with a third frequency f₃ (Hz) which is proportional to a multiple of frequency f₁ (Hz) and f₂ (Hz);
demodulation means (22) provided in said outdoor unit (20) for demodulating said modulated signal inputted from said modulation means into a third m-bit binary digital data signal with a frequency which is the product of f₁ (Hz) and said ratio n; and
radio frequency modulation means (24) within said outdoor unit (20) for directly modulating said third binary digital data signal demodulated by said demodulation means onto a predetermined radio frequency.

2. A radio station apparatus as claimed in claim 1, wherein said data rate conversion means comprises:
a digital filter (1) for oversampling said first binary digital data and outputting m-bit parallel data with frequency f₁ x n (Hz); and
a parallel/serial converter for converting the output of said digital filter into said second binary digital data of frequency f₂ (Hz).

3. A radio station apparatus as claimed in claim 2, further comprising a carrier oscillator (15) which supplies a sampling clock signal to said digital filter by means of a first frequency division operation and supplies a clock signal to said parallel/serial converter by way of a second frequency division operation.

4. A radio station apparatus as claimed in claim 1, 2 or 3, wherein the third frequency f₃ (Hz) is a constant frequency which is a common multiple of the frequency f₂ (Hz) used for each of the possible values of said frequency f₁ (Hz).

5. A radio station apparatus as claimed in any of claims 1 to 4, wherein said modulation means (13) is adapted to modulate with amplitude shift keying.

6. A radio station apparatus as claimed in any of claims 1 to 5 wherein said outdoor unit (20) comprises a multiplexer (21) for selectively outputting the modulated signal which is modulated with frequency f₃ (Hz) sent from said indoor unit (10), a demodulator (22) constituting said demodulation means for demodulating the output of said multiplexer into the third binary digital data consist of m bits with frequency of f₁ x n (Hz), a digital/analog converter (23) for converting the third binary digital data into a corresponding analog signal, a radio frequency modulator (24) constituting said radio frequency modulation means for directly modulating the analog signal with a predetermined radio frequency, and a power amplifier (25) for amplifying the signal outputted from the radio frequency modulator.

7. A radio station apparatus as claimed in claim 6, wherein said demodulator (22) comprises a carrier extraction circuit (31) for extracting a clock signal of the third frequency f₃ (Hz), a frequency divider circuit (32) for dividing the frequency f₃ (Hz) received from said carrier extraction circuit into the second frequency f₂ (Hz), a detection circuit (33) for detecting the modulated wave, and a retiming circuit (34) for converting the output of said detection circuit by serial/parallel conversion with the output of said frequency divider circuit into m-bit data with frequency f₁ x n (Hz).

8. A digital transmission method for a radio station which comprises an indoor unit (10) and an outdoor unit (20) coupled to the indoor unit by a coaxial cable (60), comprising the steps of:
converting ( 1,2) a first binary digital data signal inputted with a data rate of frequency f₁ (Hz) into a serial second binary digital data signal of frequency f₂ (Hz) where f₂ (Hz) = f₁ x n x m (Hz), where n is the oversampling ratio and m is the number of quantization bits, m and n each being an integer larger than two;
modulating (13) the serial second binary digital data signal having frequency f₂ (Hz) by amplitude shift keying onto a third binary digital data signal with a third frequency f₃ (Hz) as a carrier frequency which is a multiple of the first frequency f₁ (Hz),
demodulating (22) the third binary digital data with frequency f₃ (Hz) into an m-bit parallel signal with a frequency which is the product of frequency f₁ (Hz) and the oversampling ratio n;
converting (23) the demodulated transmission signal into analog signal;
modulating (24) said analog transmission signal with a predetermined radio carrier; and
amplifying (25) and transmitting the analog transmission signal modulated with the radio frequency carrier.

9. A signal transmission method for a radio station as claimed in claim 8, wherein the steps from the step of converting (1, 2) an incoming first binary digital data signal into a serial second binary digital signal up to the step of modulating (13) the serial second binary digital data signal having frequency f₂ (Hz) onto the third digital data signal with third frequency f₃ (Hz) are performed within an indoor unit (10) and the other steps are performed within an outdoor unit (20), said signal transmission method further comprising the steps of:
transferring the third binary digital data signal with frequency f₃ (Hz) to said outdoor unit through said coaxial cable (60); and
receiving the third binary digital data signal transferred from said indoor unit into said outdoor unit; and
transferring the received third binary digital data signal to the demodulating step (22).

10. A signal transmission method for a radio station as claimed in claim 8 or 9, further comprising a multiplexer (duplexer) (3,21) at each end of the coaxial cable (60).

11. A signal transmission method for a radio station as claimed in claim 8, 9 or 10, wherein, the inputted first binary digital data signal may have various data rates f₁ (Hz) which are different from each other, and frequency f₃ (Hz) is a frequency which is a common multiple of the second frequency f₂ (Hz) used for each of the possible values of said frequency f₁ (Hz).

## Patentansprüche

1. Funkstationsvorrichtung, die eine Inneneinheit (10) und eine durch ein Koaxialkabel (60) mit der Inneneinheit gekoppelte Außeneinheit (20) aufweist, wobei ein eingegebenes erstes binäres digitales Datensignal, dessen Datenrate zwei oder mehr Werte annehmen kann, in ein entsprechendes Signal umgewandelt, auf eine vorbestimmte Funkträgerfrequenz moduliert und über eine Antenne gesendet wird, und ein über die Antenne empfangenes Signal demoduliert und ausgegeben wird, wobei die Funkstationsvorrichtung aufweist:
eine Datenraten-Umwandlungseinrichtung (1, 2), die in der Inneneinheit (10) vorgesehen ist, zum Umwandeln des ersten binären digitalen Datensignals mit einer Frequenz f₁ (Hz) in ein serielles zweites binäres digitales Datensignal mit einer Frequenz f₂ (Hz), wobei f₂ (Hz) = f₁ x n x m (Hz) ist, wobei n das Überabtastungsverhältnis und m die Anzahl von Quantisierungsbits ist, wobei m und n jeweils eine ganze Zahl größer als zwei ist;
eine Modulationseinrichtung (13), die in der Inneneinheit (10) vorgesehen ist, zum Modulieren des zweiten binären digitalen Datensignals, um ein moduliertes Signal mit einer dritten Frequenz f₃ (Hz) zu erzeugen, die proportional zu einem Vielfachen der Frequenz f₁ (Hz) und f₂ (Hz) ist;
eine Demodulationseinrichtung (22), die in der Außeneinheit (20) vorgesehen ist, zum Demodulieren des von der Modulationseinrichtung eingegebenen modulierten Signals zu einem dritten binären digitalen m-Bit-Datensignal mit einer Frequenz, die das Produkt aus f₁ (Hz) und dem Verhältnis n ist; und
eine Funkfrequenz-Modulationseinrichtung (24) in der Außeneinheit (20) zum direkten Modulieren des durch die Demodulationseinrichtung demodulierten dritten binären digitalen Datensignals auf eine vorbestimmte Funkfrequenz.

2. Funkstationsvorrichtung nach Anspruch 1, wobei die Datenraten-Umwandlungseinrichtung aufweist:
ein Digitalfilter (1) zum Überabtasten der ersten binären digitalen Daten und Ausgeben paralleler m-Bit-Daten mit einer Frequenz f₁ x n (Hz); und
einen Parallel-Serien-Wandler zum Umwandeln der Ausgabe des Digitalfilters in die zweiten binären digitalen Daten mit der Frequenz f₂ (Hz).

3. Funkstationsvorrichtung nach Anspruch 2, ferner mit einem Trägeroszillator (15), der ein Abtasttaktsignal zum Digitalfilter mittels eines ersten Frequenzteilungsbetriebs führt und ein Taktsignal zum Parallel-Serien-Wandler über einen zweiten Frequenzteilungsbetrieb führt.

4. Funkstationsvorrichtung nach Anspruch 1, 2 oder 3, wobei die dritte Frequenz f₃ (Hz) eine Konstantfrequenz ist, die ein gemeinsames Vielfaches der Frequenz f₂ in der Verwendung für jeden der möglichen Werte der Frequenz f₁ (Hz) ist.

5. Funkstationsvorrichtung nach einem der Ansprüche 1 bis 4, wobei die Modulationseinrichtung (13) geeignet ist, mit Amplitudenumtastung zu modulieren.

6. Funkstationsvorrichtung nach einem der Ansprüche 1 bis 5, wobei die Außeneinheit (20) aufweist: einen Multiplexer (21) zum selektiven Ausgeben des modulierten Signals, das mit der Frequenz f₃ (Hz) moduliert wird, die von der Inneneinheit (10) gesendet wird, einen Demodulator (22), der die Demodulationseinrichtung zum Demodulieren der Ausgabe des Multiplexers in die dritten binären digitalen Daten bildet, die aus m Bits mit der Frequenz f₁ x n (Hz) bestehen, einen Digital-Analog-Wandler (23) zum Umwandeln der dritten binären digitalen Daten in ein entsprechendes analoges Signal, einen Funkfrequenzmodulator (24), der die Funkfrequenz-Modulationseinrichtung zum direkten Modulieren des analogen Signals mit einer vorbestimmten Funkfrequenz bildet, und einen Leistungsverstärker (25) zum Verstärken des vom Funkfrequenzmodulator ausgegebenen Signals.

7. Funkstationsvorrichtung nach Anspruch 6, wobei der Demodulator (22) aufweist: eine Trägerextraktionsschaltung (31) zum Extrahieren eines Taktsignals mit der dritten Frequenz f₃ (Hz), eine Frequenzteilerschaltung (32) zum Teilen der von der Trägerextraktionsschaltung empfangenen Frequenz f₃ (Hz) in die zweite Frequenz f₂ (Hz), eine Detektionsschaltung (33) zum Detektieren der modulierten Welle und eine Neutaktungsschaltung (34) zum Umwandeln der Ausgabe der Detektionsschaltung durch Serien-Parallel-Umwandlung mit der Ausgabe der Frequenzteilerschaltung in m-Bit-Daten mit der Frequenz f₁ x n (Hz).

8. Digitales Sendeverfahren für eine Funkstation, die eine Inneneinheit (10) und eine durch ein Koaxialkabel (60) mit der Inneneinheit gekoppelte Außeneinheit (20) aufweist, mit den folgenden Schritten:
Umwandeln (1, 2) eines ersten binären digitalen Datensignals, das mit einer Datenrate mit einer Frequenz f₁ (Hz) eingegeben wird, in ein serielles zweites binäres digitales Datensignal mit einer Frequenz f₂ (Hz), wobei f₂ (Hz) = f₁ x n x m (Hz) ist, wobei n das Überabtastungsverhältnis und m die Anzahl von Quantisierungsbits ist, wobei m und n jeweils eine ganze Zahl größer als zwei ist;
Modulieren (13) des seriellen zweiten binären digitalen Datensignals mit der Frequenz f₂ (Hz) durch Amplitudenumtastung auf ein drittes binäres digitales Datensignal mit einer dritten Frequenz f₃ (Hz) als Trägerfrequenz, die ein Vielfaches der ersten Frequenz f₁ (Hz) ist;
Demodulieren (22) der dritten binären digitalen Daten mit der Frequenz f₃ (Hz) in ein paralleles m-Bit-Signal mit einer Frequenz, die das Produkt aus der Frequenz f₁ (Hz) und dem Überabtastungsverhältnis n ist;
Umwandeln (23) des demodulierten Sendesignals in ein analoges Signal;
Modulieren (24) des analogen Sendesignals mit einem vorbestimmten Funkträger; und
Verstärken (25) und Senden des analogen Sendesignals, das mit dem Funkfrequenzträger moduliert ist.

9. Signalsendeverfahren für eine Funkstation nach Anspruch 8, wobei die Schritte vom Schritt des Umwandelns (1, 2) eines ankommenden ersten binären digitalen Datensignals in ein serielles zweites binäres digitales Signal bis zum Schritt des Modulierens (13) des seriellen zweiten binären digitalen Datensignals mit der Frequenz f₂ (Hz) auf das dritte digitale Datensignal mit der dritten Frequenz f₃ (Hz) in einer Inneneinheit (10) durchgeführt werden und die anderen Schritte in einer Außeneinheit (20) durchgeführt werden, wobei das Signalsendeverfahren ferner die folgenden Schritte aufweist:
Übertragen des dritten binären digitalen Datensignals mit der Frequenz f₃ (Hz) zur Außeneinheit über das Koaxialkabel (60); und
Empfangen des von der Inneneinheit zur Außeneinheit übertragenen dritten binären digitalen Datensignals; und
Übertragen des empfangenen dritten binären digitalen Datensignals zum Demodulationsschritt (22).

10. Signalsendeverfahren für eine Funkstation nach Anspruch 8 oder 9, ferner mit einem Multiplexer (Duplexer) (3, 21) an jedem Ende des Koaxialkabels (60).

11. Signalsendeverfahren für eine Funkstation nach Anspruch 8, 9 oder 10, wobei das eingegebene erste binäre digitale Datensignal verschiedene Datenraten f₁ (Hz) haben kann, die sich voneinander unterscheiden, und die Frequenz f₃ (Hz) eine Frequenz ist, die ein gemeinsames Vielfaches der zweiten Frequenz f₂ in der Verwendung für jeden der möglichen Werte der Frequenz f₁ (Hz) ist.

## Revendications

1. Dispositif de station radio, qui comprend une unité intérieure (10) et une unité extérieure (20) couplée à l'unité intérieure par un câble coaxial (60), dans lequel un premier signal entré de données numériques binaires dont le débit de données peut prendre deux valeurs ou plus est converti en un signal correspondant, modulé sur une fréquence de porteuse radio prédéterminée, et émis par l'intermédiaire d'une antenne, et un signal reçu par l'intermédiaire de ladite antenne est modulé et délivré, ledit dispositif de station radio comprenant :
des moyens de conversion de débit de données (1, 2) disposés dans ladite unité intérieure (10) pour convertir ledit premier signal de données numériques binaires de fréquence f₁ (Hz) en un second signal de données numériques binaires série de fréquence f₂ (Hz) où f₂ (Hz) = f₁ x n x m (Hz) où n est le taux de suréchantillonnage et m est le nombre de bits de quantification, m et n étant chacun un entier supérieur à 2 ;
des moyens de modulation (13) disposés dans ladite unité intérieure (10) pour moduler ledit second signal de données binaires numériques de manière à générer un signal modulé ayant une troisième fréquence f₃ (Hz) qui est proportionnelle à un multiple de la fréquence f₁ (Hz) et de la fréquence f₂ (Hz) ;
des moyens de démodulation (22) disposés dans ladite unité extérieure (20) pour démoduler ledit signal modulé entré depuis lesdits moyens de modulation en un troisième signal de données numériques binaires à m bits ayant une fréquence qui est le produit de f₁ (Hz) par ledit taux n ; et
des moyens de modulation de fréquence radio (24) au sein de ladite unité extérieure (20) pour moduler directement ledit troisième signal de données numériques binaires démodulé par lesdits moyens de démodulation sur une fréquence radio prédéterminée.

2. Dispositif de station radio selon la revendication 1, dans lequel lesdits moyens de conversion de débit de données comprennent :
un filtre numérique (1) pour suréchantillonner lesdites premières données numériques binaires et pour délivrer des données parallèles m bits avec une fréquence f₁ x n (Hz) ; et
un convertisseur parallèle-série destiné à convertir la sortie dudit filtre numérique en ledit second signal de données numériques binaires de fréquence f₂ (Hz).

3. Dispositif de station radio selon la revendication 2, comprenant, en outre, un oscillateur de porteuse (15) qui délivre un signal d'horloge d'échantillonnage audit filtre numérique au travers d'une première opération de division de fréquence, et qui délivre un signal d'horloge audit convertisseur parallèle-série au travers d'une seconde opération de division de fréquence.

4. Dispositif de station radio selon la revendication 1, 2 ou 3, dans lequel la troisième fréquence f₃ (Hz) est une fréquence constante qui est un multiple commun de la fréquence f₂ (Hz) utilisée pour chacune des valeurs possibles de ladite fréquence f₁ (Hz).

5. Dispositif de station radio selon l'une quelconque des revendications 1 à 4, dans lequel lesdits moyens de modulation (13) sont conçus pour accomplir une modulation par déplacement d'amplitude.

6. Dispositif de station radio selon l'une quelconque des revendications 1 à 5, dans lequel ladite unité extérieure (20) comprend un multiplexeur (21) pour délivrer sélectivement le signal modulé qui est modulé avec la fréquence f₃ (Hz) provenant de ladite unité intérieure (10), un démodulateur (22) constituant lesdits moyens de démodulation pour démoduler le signal de sortie dudit multiplexeur en le troisième signal de données numériques binaires constituées de m bits avec la fréquence f₁ x n (Hz), un convertisseur numérique-analogique (23) destiné à convertir le troisième signal de données numériques binaires en un signal analogique correspondant, un modulateur de fréquence radio (24) constituant lesdits moyens de modulation de fréquence radio pour moduler directement le signal analogique avec une fréquence radio prédéterminée, et un amplificateur de puissance (25) destiné à amplifier le signal délivré par le modulateur de fréquence radio.

7. Dispositif de station radio selon la revendication 6, dans lequel ledit démodulateur (22) comprend un circuit d'extraction de porteuse (31) destiné à extraire un signal d'horloge de la troisième fréquence f₃ (Hz), un circuit diviseur de fréquence (32) destiné à diviser la fréquence f₃ (Hz) reçue en provenance dudit circuit d'extraction de porteuse en la seconde fréquence f₂ (Hz), un circuit de détection (33) destiné à détecter l'onde modulée, et un circuit de resynchronisation (34) destiné à convertir la sortie dudit circuit de détection par conversion série-parallèle avec la sortie dudit circuit diviseur de fréquence en des données à m bits avec la fréquence f₁ x n (Hz).

8. Procédé de transmission numérique destiné à une station radio qui comprend une unité intérieure (10) et une unité extérieure (20) couplée à l'unité intérieure par un câble coaxial (60), comprenant les étapes consistant :
à convertir (1, 2) un premier signal entré de données numériques binaires avec un débit de données de fréquence f₁ (Hz) en un second signal de données numériques binaires de fréquence série f₂ (Hz), où f₂ (Hz) = f₁ x n x m (Hz), où n est le taux de suréchantillonnage et m est le nombre de bits de quantification, m et n étant chacun un entier supérieur à deux ;
à moduler (13) le second signal de données numériques binaires série ayant la fréquence f₂ (Hz) par modulation par déplacement d'amplitude sur un troisième signal de données numériques binaires avec une troisième fréquence f₃ (Hz) en tant que fréquence de porteuse, qui est un multiple de la première fréquence f₁ (Hz),
à démoduler (22) les troisièmes données numériques binaires avec la fréquence f₃ (Hz) en un signal parallèle à m bits avec une fréquence qui est le produit de la fréquence f₁ (Hz) par le taux de suréchantillonnage n ;
à convertir (23) le signal de transmission démodulé en un signal analogique ;
à moduler (24) ledit signal de transmission analogique avec une porteuse radio prédéterminée ; et
à amplifier (25) et à transmettre le signal de transmission analogique modulé avec la porteuse de fréquence radio.

9. Procédé de transmission de signal pour une station radio selon la revendication 8, dans lequel les étapes qui vont de l'étape consistant à convertir (1, 2) un premier signal de données numériques binaires entrant en un second signal de données numériques binaires série jusqu'à l'étape consistant à moduler (13) le second signal de données numériques binaires série ayant une fréquence f₂ (Hz) sur le troisième signal de données numériques avec la troisième fréquence f₃ (Hz) sont accomplies au sein d'une unité intérieure (10) et les autres étapes sont accomplies au sein d'une unité extérieure (20), ledit procédé de transmission de signal comprenant, en outre, les étapes consistant :
à transférer le troisième signal de données numériques binaires avec la fréquence f₃ (Hz) à ladite unité extérieure par l'intermédiaire dudit câble coaxial (60) ; et
à recevoir le troisième signal de données numériques binaires transféré de ladite unité intérieure à ladite unité extérieure ; et
à transférer le troisième signal de données numériques binaires reçu à l'étape de démodulation (22).

10. Procédé de transmission de signal pour une station radio selon la revendication 8 ou 9, comprenant, en outre, un multiplexeur (duplexeur) (3, 21) à chaque borne du câble coaxial (60).

11. Procédé de transmission de signal pour une station radio selon la revendication 8, 9 ou 10, dans lequel, le premier signal entré de données numériques binaires peut présenter divers débits de données f₁ (Hz) qui diffèrent les uns des autres, et la fréquence f₃ (Hz) est une fréquence qui est un multiple commun de la seconde fréquence f₂ (Hz) utilisée pour chacune des valeurs possibles de ladite fréquence f₁ (Hz).
